# FASCICULE DE BREVET EUROPEEN

(11) **EP 2 697 266 B1**
(45) Date de publication et mention de la délivrance du brevet: **22.02.2017**
(21) Numéro de dépôt: 11799287.5
(22) Date de dépôt: 21.12.2011
(51) Int. Cl.: C08C 1/15, B60C 1/00, C08J 3/22, C08K 3/36, C08L 21/00, C08K 3/00, C08J 3/21, C08K 9/06, C08L 7/00

(54) **PROCEDE DE PREPARATION D'UN MELANGE MAÎTRE D'ELASTOMERE ET D'UNE CHARGE INORGANIQUE RENFORÇANTE**
VERFAHREN ZUR MASTERBATCH-HERSTELLUNG AUS EINEM ELASTOMER UND EINEM ANORGANISCHEN VERSTÄRKUNGSFÜLLSTOFF
METHOD FOR PREPARING A MASTERBATCH OF AN ELASTOMER AND AN INORGANIC REINFORCING FILLER

(30) Priorité: 15.04.2011 FR 1153316
(43) Date de publication de la demande: 19.02.2014
(73) Titulaire: Compagnie Générale des Etablissements Michelin, 63000 Clermont-Ferrand (FR); MICHELIN Recherche et Technique S.A., 1763 Granges-Paccot (CH); Bibette, Jérôme, 75005 Paris (FR); Martinez Pedrero, Fernando, 28040 Madrid (ES)
(72) Inventeur: BIBETTE, Jérôme, F-75005 Paris (FR); MARTINEZ PEDRERO, Fernando, E-28040 Madrid (ES); DE GAUDEMARIS, Benoît, F-63040 Clermont-Ferrand Cedex 09 (FR); BERRIOT, Julien, F-63040 Clermont-Ferrand Cedex 09 (FR)
(74) Mandataire: Cohen, Sylvia
(86) Numéro de dépôt international: PCT/EP2011/073666
(87) Numéro de publication internationale: WO 2012/139669

(56) Documents cités:
- EP-A1- 1 834 980
- WO-A2-01/10946
- US-A- 5 763 388
- US-A1- 2010 022 684

## Description

L'invention concerne la préparation d'un mélange-maître d'élastomère diénique et de charge inorganique renforçante comprenant un latex d'élastomère diénique, en particulier un latex de caoutchouc naturel et au moins une charge inorganique renforçante coagulant spontanément avec ledit latex.

On entend par « mélange-maître » (couramment désigné par son nom anglais « masterbatch »): un composite à base d'élastomère dans lequel a été introduit une charge et éventuellement d'autres additifs.

La présente invention se rapporte en particulier à l'utilisation d'un tel mélange-maître pour la fabrication de compositions de caoutchoucs diéniques renforcées d'une charge inorganique, destinées à la fabrication de pneumatiques ou de produits semi-finis pour pneumatiques, en particulier de bandes de roulement de ces pneumatiques.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues; ces interactions tendent d'autre part à augmenter la consistance à l'état cru des compositions caoutchouteuses et donc à rendre leur mise en oeuvre ("processability") plus difficile qu'en présence de noir de carbone.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Des bandes de roulement chargées de telles silices hautement dispersibles (notées "HD" ou "HDS" pour "highly dispersible" ou "highly dispersible silica"), utilisables dans les pneumatiques à basse résistance au roulement parfois qualifiés de "Pneus Verts" pour l'économie d'énergie offerte à l'usager ("Green Tyre concept"), ont été abondamment décrites. On se reportera notamment aux demandes de brevet EP 501 227, EP 692 492, EP 692 493, EP 735 088, EP 767 206, EP 786 493, EP 881 252, WO99/02590, WO99/02601, WO99/02602, WO99/06480, WO00/05300, WO00/05301.

Ces documents de l'art antérieur enseignent l'utilisation de silices du type HD présentant une surface spécifique BET comprise entre 100 et 250 m²/g. En pratique, une silice HD à haute surface spécifique faisant référence dans le domaine des "Pneus Verts" est en particulier la silice "Zeosil 1165 MP" (surface BET égale à environ 160 m²/g) commercialisée par la société Rhodia. L'utilisation de cette silice "Zeosil 1165 MP" permet d'obtenir de bons compromis en matière de performance pneumatique, notamment une résistance à l'usure et une résistance au roulement satisfaisantes.

L'intérêt d'utiliser une silice à haute surface spécifique réside principalement dans la possibilité d'augmenter le nombre de liaisons de la silice avec l'élastomère et donc d'augmenter le niveau de renforcement de celui-ci. C'est pourquoi il apparaît avantageux d'utiliser dans des compositions de caoutchouc pour bandes de roulement de pneumatiques, des silices à haute surface spécifique, éventuellement supérieure à celle classiquement utilisée de l'ordre de 160 m²/g, pour notamment améliorer la résistance à l'usure de ces bandes de roulement. Néanmoins, la dispersibilité de la charge et l'accroissement de sa surface spécifique sont considérés comme des caractéristiques antinomiques. En effet, une grande surface spécifique suppose une augmentation des interactions entre objets de charge, et donc une mauvaise dispersion de celle-ci dans la matrice élastomère ainsi qu'une mise en oeuvre malaisée.

Un autre type de solutions a été envisagé qui consiste, pour améliorer la dispersiblité de la charge dans la matrice élastomérique, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une silice dispersée dans de l'eau, couramment appelée « slurry ». Cependant la mise en contact du latex d'élastomère et du slurry ne permet pas d'avoir une coagulation au sein du milieu liquide, coagulation qui devrait permettre d'obtenir un solide qui après séchage, aboutisse à l'obtention du mélange-maître d'élastomère et de silice souhaité.

En effet, les agrégats de silice sont typiquement hydrophiles dans la nature et ont une affinité avec l'eau, ainsi les agrégats de silice ont davantage d'affinité avec l'eau qu'avec les particules d'élastomère elles-mêmes.

Différentes solutions ont été proposées pour permettre néanmoins d'obtenir cette coagulation et une bonne dispersion de la charge dans la matrice élastomérique en phase « liquide » par l'utilisation combinée d'un agent permettant d'augmenter l'affinité entre l'élastomère et la silice, tel qu'un agent de couplage, et d'un agent permettant de réaliser la prise en masse, donc la coagulation, appelé agent de coagulation.

Ainsi par exemple le brevet US 5,763,388 propose l'incorporation de la silice dans le latex de caoutchouc en traitant la silice avec un agent de couplage, mélangeant la silice ainsi traitée en présence des agents de coagulation classiques.

Le brevet EP1321488 se propose également de mettre en contact une dispersion aqueuse avec de la silice chargée négativement et un latex d'élastomère diénique, avec une émulsion contenant un agent de couplage polysulfure, en présence d'un agent de coagulation tel qu'une polyamine. Par ailleurs, la demande de brevet US 2010/022684 porte sur un procédé de préparation d'un mélange-maître, d'un élastomère et d'une silice hydrophobée. Un agent de coagulation, notamment le chlorure de calcium, est ajouté pour permettre la coagulation avec l'élastomère.

Les demanderesses ont découvert de façon surprenante un procédé de préparation d'un mélange-maître silice-élastomère préparé en phase « liquide » sans utiliser d'agent de coagulation.

Le procédé de préparation d'un mélange-maître d'élastomère diénique et de charge inorganique renforçante, conforme à l'invention, comprend les étapes successives suivantes :
- mise en contact et mélange d'une ou plusieurs dispersions aqueuses (B) d'une ou plusieurs charges inorganiques renforçantes hydrophobées et coagulant spontanément avec ledit latex et d'un ou plusieurs latex d'élastomère diénique (A) pour obtenir un coagulum, sans nécessité d'agent de coagulation,
- récupération du coagulum, puis
- séchage du coagulum récupéré pour obtenir le mélange-maître.

D'autres objets, caractéristiques, aspects et avantages de l'invention apparaîtront encore plus clairement à la lecture de la description et des exemples qui suivent.

### Latex d'élastomère diénique (A)

Par élastomère sous forme de latex, on entend au sens de la présente invention un élastomère se présentant sous forme de particules d'élastomère dispersées dans l'eau

L'invention concerne les latex d'élastomères diéniques, les élastomères diéniques étant définis comme suit :
Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Pour le caoutchouc naturel (NR) qui convient particulièrement à l'invention, ce caoutchouc naturel existe sous différentes formes comme le détail le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« latex field »), les latex de caoutchouc naturel dits « concentrés » (« concentrated natural rubber latex »), les latex epoxydés (« ENR »), les latex déprotéinisés, les latex ayant subi une étape de clivage de liaison amide ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite « HA » (high ammonia) et de qualité dite « LA » ; on utilisera avantageusement pour l'invention des latex de caoutchouc naturel concentrés de qualité HA.

Le latex peut être utilisé directement ou être préalablement dilué dans de l'eau pour faciliter sa mise en oeuvre.

Par élastomères diéniques synthétiques susceptible d'être utilisé conformément à l'invention, on entend plus particulièrement par élastomère diénique:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Ainsi à titre de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensioactif.

Convient particulièrement à l'invention un latex de SBR, notamment un SBR préparé en émulsion ("ESBR") ou un SBR préparé en solution ("SSBR"), et plus particulièrement un SBR préparé en émulsion.

Il existe deux grands types de procédés de copolymérisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81.

Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co. , Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

Selon un mode de réalisation préféré de l'invention, le procédé met en oeuvre une dispersion aqueuse de caoutchouc naturel, et plus particulièrement un latex concentré de caoutchouc naturel, et notamment un latex de caoutchouc naturel concentré de qualité dite: « HA » (high ammonia) et de qualité dite « LA ». Plus particulièrement, le latex de caoutchouc naturel concentré de qualité dite : « HA » (high ammonia) est utilisé.

La concentration en caoutchouc naturel dans la dispersion aqueuse (A) est de 10 à 65% en poids, de préférence de 30 à 65% en poids, et notamment de 40 à 65% en poids par rapport au poids total de la dispersion.

### Dispersion aqueuse d'une ou plusieurs charges inorganiques renforçantes (B)

Par charge, au sens de la présente invention, on entend l'espèce chimique, qui va subir une modification chimique, pour ensuite une fois modifiée être présente dans la dispersion (B) puis mise en contacte avec la dispersion aqueuse de latex d'élastomère diénique (A), pour former le coagulum. Ainsi, ce terme ne désigne que l'espèce chimique non modifiée, telle que la silice.

Par "charge inorganique renforçante" selon l'invention, doit être entendu dans la présente demande, par définition, toute charge inorganique ou minérale (quelles que soient sa couleur et son origine (naturelle ou de synthèse)), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Dans le cadre de la présente invention, une telle charge se caractérise par son caractère hydrophile, c'est-à-dire généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses telles que décrites ci-après.

En tant que silice peut être mentionnée la silice précipitée, pyrogénée ou colloïdale. En tant que charge inorganique, peuvent être citées: la silice (SiO₂), l'alumine (Al₂O₃) ; l'alumine monohydrate (Al₂O₃ H_{2O}) ; l'hydroxyde d'aluminium [Al(OH)3]; le carbonate d'aluminium [Al₂(CO₃)₃]; l'hydroxyde de magnésium [Mg(OH)₂], l'oxyde de magnésium (MgO), le carbonate de magnésium (MgCO₃), le talc (₃MgO ₄SiO₂ H₂O), l'attapulgite (5MgO 8SiO₂ 9H₂O), le dioxyde de titane (TiO₂), le noir de titane (TiO₂ₙ₋₁), l'oxyde de calcium (CaO), l'hydroxyde de calcium [Ca(OH)2], l'oxyde d'aluminium et de magnésium (MgO Al₂O₃), l'argile (Al₂O₃ 2SiO₂), le kaolin (Al₂O₃ 2SiO₂ 2H₂O), la pyrophyllite (Al₂O₃ 4SiO₂ H₂O), la bentonite (Al₂O₃ 4SiO₂ 2H₂O), le silicate d'aluminium (Al₂SiO₅, Al₄·3SiO₄ 5H₂O), le silicate de magnésium (Mg₂SiO₄, MgSiO₃), le silicate de calcium (Ca₂SiO₄), le silicate d'aluminium et de calcium (Al₂O₃ CaO 2SiO₂), le silicate de magnésium et de calcium (CaMgSi₄), le carbonate de calcium (CaCO₃), l'oxyde de zirconium (ZrO₂), l'hydroxyde de zirconium [ZrO(OH)₂ nH₂O], le carbonate de zirconium [Zr(CO₃)₂], et les aluminosilicates cristallins contenant des atomes d'hydrogène compensant des charges, des métaux alcalins, des métaux alcalino-terreux , tel que les zéolithes, et leur mélange.

Comme charges inorganiques renforçantes conviennent notamment des charges minérales du type silicieuse, en particulier de la silice (SiO₂), ou du type alumineuse, en particulier de l'alumine (Al₂O₃). De préférence, la silice est utilisée. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées, on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Selon un autre mode de réalisation de l'invention, l'élastomère diénique mis en oeuvre est du caoutchouc naturel et la charge inorganique utilisée est de la silice.

Contrairement au noir de carbone, la charge mise en oeuvre selon l'invention ne coagule pas spontanément avec le caoutchouc naturel. Dans le cas particulier de la silice, les agrégats de silice sont typiquement hydrophiles et ont davantage d'affinité avec l'eau qu'avec les particules d'élastomère elles-mêmes.

Différentes solutions ont été proposées pour permettre néanmoins d'obtenir la coagulation de la charge dans la matrice élastomérique en phase liquide.

Ainsi, il est nécessaire de modifier en surface la charge selon l'invention, afin de créer l'affinité nécessaire entre les particules de charge et les particules d'élastomère. La capacité de la charge à coaguler spontanément avec l'élastomère, c'est-à-dire sans nécessité d'agent de coagulation, provient des propriétés de surface de ladite charge.

Or, il a été observé de manière surprenante que la mise en contact de la dispersion aqueuse (B) de charge hydrophobée et de la dispersion (A) de latex d'élastomère diénique conduit à la formation d'un coagulum.

Pour rendre la charge selon l'invention hydrophobe, il est greffé sur la particule un ou plusieurs agents hydrophobants de formule (I) suivante :

Eₙ-F (Formule I)

dans laquelle
- n est un entier égal à 1 ou 2,
- lorsque n vaut 1, alors F est un groupe monovalent,
- lorsque n vaut 2, alors F est un groupe divalent,
- E représente un groupe fonctionnel qui est capable de se lier physiquement et/ou chimiquement à la charge et comportant dans sa structure au moins une chaîne alkyle ou alkylène comportant de 1 à 18 atomes de carbone conférant au groupe E des propriétés hydrophobantes ;
- F représente un groupe pouvant se lier ou non physiquement et/ou chimiquement à l'élastomère diénique.

Avantageusement, l'agent hydrophobant est de formule (II) suivante :

[G₍₃₋ₘ₎(L-K)ₘSi-L-]ₙ-F (II)

avec
lorsque n vaut 1, alors F désigne le groupe K défini ci-dessous, et m varie de 0 à 2, et
lorsque n vaut 2, alors F désigne un groupe amino, un groupe polysulfure (Sx), un groupe époxy, et m varie de 0 à 2,
et pour laquelle
les groupements G sont choisis, indépendamment les uns des autres, parmi un atome d'hydrogène, un groupe hydrocarboné en C₁-C₁₈ choisi parmi les groupes alkyles linéaires, ramifiés ou cycliques, les groupes aralkyles, les groupes alkylaryles et les groupes aryles, tel qu'un phényle, un benzyle, un cyclopentyle, un cyclohexyle, un groupe alkoxy (R₁O)-, dans lequel R₁ représente un radical alkyle saturé en C₁-C₈, tel que par exemple les groupes méthyle, éthyle, isopropyle, de préférence au moins un groupe méthyle et éthyle, un atome d'halogène, tel que le fluor, le chlore, le brome et l'iode et un groupement hydroxy,
à la condition qu'au moins un groupement G soit choisi parmi un groupement alkoxy, un atome de chlore, ou un groupement hydroxy,
L désigne un radical alkylène saturé ou insaturé, linéaire, ramifiée ou cyclique en C₁-C₁₈, et de préférence 1 à 8 atomes de carbone, tel que par exemple les groupes méthylène, éthylène, isopropylène, n-butylène, octadécylène, phénylène, cyclopentylène et cyclohexylène, et comportant éventuellement un atome d'oxygène,
K désigne un atome d'hydrogène, un atome d'halogène, tel que le fluor, le chlore, le brome et l'iode, un groupe fonctionnel choisi parmi un groupe amino, un groupe polyamino alkyle, un groupe mercapto, un groupe époxy, un groupe hydroxy, un groupe vinyle, un groupe acryloxy, un groupe méthacryloxy, un groupe -SCN, un groupe R(CO)S- avec R étant un groupe alkyle en C₁-C₁₈.

De préférence, m=0.

Ainsi, selon un premier mode de réalisation particulier de l'invention, l'agent hydrophobant est de formule (III) suivante :

G₃Si-L-K (III)

avec G, L et K étant tels que définis ci-dessus. Selon un deuxième mode de réalisation particulier de l'invention, l'agent hydrophobant est de formule (IV) suivante :

[G₃Si-L-]₂-F (IV)

avec G, L et F étant tels que définis ci-dessus.

De préférence, l'agent hydrophobant est choisi parmi le chlorotriméthylsilane, chlorotriéthylsilane, chlorotripropylsilane, bromotriméthylsilane, bromotriéthylsilane, bromotripropylsilane, fluorotriméthylsilane, méthoxy triméthylsilane, méthoxytriéthylsilane, méthoxytripropylsilane, chlorotriméthylsilane, dichlorodiméthylsilane, trichlorométhylsilane, bromotriméthylsilane, dibromodiméthylsilane, tribromométhylsilane, méthoxytriméthylsilane, diméthoxydiméthyl silane, triméthoxyméthylsilane, tétraméthoxysilane, triméthoxypropylsilane, triméthoxyoctylsilane, triméthoxy hexadécylsilane, diméthoxydipropyl silane, triéthoxyméthyl silane, triéthoxypropylsilane, triéthoxyoctylsilane, le diéthoxydiméthylsilane, l'octényldiméthylchlorosilane, octodécyltrichlorosilane, (gamma-aminopropyl)-triméthoxysilane, (gamma-aminopropyl)-triéthoxysilane, (gamma-hydroxypropyl) tripropoxysilane, (gamma-mercaptopropyl)-triéthoxysilane, (gamma-aminopropyl)-diméthyléthoxysilane, (gamma-aminopropyl)-dihydroxy méthoxysilane, (glycidylpropyl)-triméthoxysilane, [(N-aminoéthyl) gamma-aminopropyl]triéthoxysilane, (gamma-méthacryloxy-propyl) triéthoxysilane, (gamma-méthacryloxy-propyl)triméthoxysilane, (béta-mercaptoéthyl)-triéthoxysilane, [gamma-(N-aminoéthyl)propyl] triméthoxysilane, N-méthylaminopropyltriméthoxysilane, (gamma-thiocyanatopropyl)-triéthoxysilane, bis-(3-triéthoxythiopropyl) silanetétrasulfure, vinyltriéthoxysilane, vinylphénylméthylsilane, vinyl diméthylméthoxysilane, divinyldiméthoxysilane, divinyléthyl diméthoxysilane, diméthylvinylchlorosilane et leur mélange.

Parmi les composés alkoxysilane-polysulfure connus, doit être particulièrement cité le tétrasulfure de bis 3-triéthoxysilylpropyle (en abrégé "TESPT"), de formule [(C₂H₅O)₃Si(CH₂)₃S₂]₂, commercialisé notamment par la société Degussa sous la dénomination "Si69", sous la forme d'un mélange commercial de polysulfures Sₓ avec une valeur moyenne pour x qui est proche de 4.

Selon un mode de réalisation préféré de l'invention, l'agent hydrophobant est choisi parmi l'octényldiméthylchlorosilane, le tétrasulfure de bis 3-triéthoxysilylpropyle et leur mélange.

Selon l'invention, l'un des groupes alkoxy, ou l'atome d'halogène porté par le silane réagira avec un groupe silanol présent à la surface de la silice, lorsque la charge selon l'invention est de la silice.

De préférence, l'agent hydrophobant une fois fixé sur la charge comporte au plus 30 atomes de carbone, et plus particulièrement de 1 à 25 atomes de carbone.

Par charge hydrophobée, on entend au sens de la présente invention une charge qui porte suffisamment d'agents hydrophobants pour permettre la coagulation spontanée de la charge avec l'élastomère.

De préférence, la charge hydrophobée se caractérise par un taux d'hydrophobation supérieur ou égal à 0,29 atome de carbone portés par l'agent hydrophobant une fois fixé sur la charge par nm² de surface de charge.

Préférentiellement, le taux d'hydrophobation est compris entre 0,29 et 0,73 atome de carbone/nm² de surface.

La surface spécifique BET d'une charge est généralement mesurée, et de manière connue en soi selon la méthode de BRUNAU-EMMETT-TELLER décrite dans « The Journal of the American Chemical Society », Vol. 60, page 309, Fev. 1938, correspondant à la norme ISO 5794/1.

### Préparation de la dispersion aqueuse de charge (B)

La ou les charges selon l'invention sont ensuite dispersées dans de l'eau, de préférence de sorte à obtenir une dispersion dont la viscosité est suffisante pour être aisément manipulable.

Avantageusement, la dispersion est sonifiée afin de permettre l'obtention d'une stabilité des agrégats dans l'eau, ce qui permet d'améliorer la dispersibilité de la dispersion aqueuse de charge dans le mélange-maître ensuite réalisé.

Cette sonification peut notamment être réalisée à l'aide d'un générateur Vibracell fabriqué par SONICS et Materials Inc de 1500 Watts avec un convertisseur piezoélectrique avec cristal PZT (référence 75010), un booster pour la sonde et une sonde en alliage titane de diamètre 19mm (pour une hauteur de 127mm).

Dans la dispersion aqueuse (B) comprenant les charges, la concentration en charges est préférentiellement comprise entre 0,1 à 20% en poids, préférentiellement entre 1 à 15% en poids par rapport à l'eau présente dans la dispersion aqueuse de charge (B).

### Mise en contact des deux dispersions

Le latex de l'élastomère diénique (A) et la dispersion de charge (B) sont mis en contact. Le slurry de charge est versé lentement dans le latex d'élastomère, ou inversement, sous une agitation de préférence lente de manière à assurer une bonne homogénéisation du milieu. Le mélange des dispersions (A) et (B) de manière simultanée l'une dans l'autre avec un débit contrôlé est également envisageable.

Il est possible d'utiliser tout type d'appareil permettant un mélange efficace de deux produits en phase liquide, ainsi on pourra utiliser un mélangeur statique tel que ceux commercialisés par les sociétés Noritake Co., Limited, TAH aux USA, KOFLO aux USA, ou TOKUSHU KIKA KOGYO Co., Ltd. ou un mélangeur réalisant un haut cisaillement tel que des mélangeurs commercialisés par TOKUSHU KIKA KOGYO Co., Ltd., ou par la société PUC en Allemagne, par la société CAVITRON en Allemagne ou par la société SILVERSON au Royaume Uni.

Lors de la coagulation de ces deux dispersions, un coagulum d'élastomère et de charge se forme soit sous forme d'un seul élément solide dans la solution, soit sous forme de plusieurs éléments solides séparés.

Le volume de dispersion aqueuse de la charge (B) dépend du taux de charge visé pour le mélange-maître à réaliser, du volume du latex d'élastomère diénique (A) et de leur concentration respective.

Ainsi, le volume sera adapté en conséquence. Avantageusement, le taux de charge visé pour le mélange-maître est compris entre 10 et 150 pce, de préférence entre 10 à 100 pce et plus préférentiellement entre 15 et 90 pce, encore plus préférentiellement entre 15 et 70 pce.

De préférence, le procédé selon l'invention ne comporte pas l'ajout d'agent de coagulation.

Selon un autre mode de réalisation, il est possible d'ajouter aux dispersions (C) un ou plusieurs agents de coagulation de manière à améliorer le rendement de l'étape de coagulation. Dans cette éventualité, l'agent de coagulation n'est pas le facteur responsable du déclenchement de la coagulation.

### Récupération du solide formé

Le ou les solides sont récupérés par exemple par filtration ou par centrifugation. En effet, l'opération de filtrage qui peut être réalisée à l'aide d'un tamis de filtration, peut s'avérer inadaptée lorsque le coagulum se présente sous forme de nombreux et petits éléments solides. Dans un tel cas, on réalise de préférence une opération de centrifugation supplémentaire.

A l'issue de cette étape de récupération, le coagulum obtenu est séché, par exemple à l'étuve.

Le procédé selon l'invention peut s'effectuer de manière continue, aussi bien que de manière discontinue.

### Additifs

Le latex d'élastomère diénique (A) et la dispersion aqueuse de charge (B) conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation exclusion faite bien entendu des activateurs à base de zinc (ou dans le respect des 0,5 pce maximum de zinc dans la composition, et de préférence moins de 0,3 pce).

De préférence, ces dispersions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Les additifs décrits précédemment pourraient également être incorporés au mélange maître après la formation du coagulum.

Il est également possible d'ajouter au milieu, après coagulation des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique ou organique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthyl siloxanes), des acides gras comme par exemple l'acide stéarique, et des charges renforçantes différentes de celles décrites ci-dessus, tel que le noir de carbone.

Les exemples suivants servent à illustrer l'invention sans toutefois présenter un caractère limitatif.

### EXEMPLES

### matériel utilisé

- générateur d'ultrason Bricel de modèle VCX500 (réf. Fisher W75043) de puissance 500W, utilisé à 60 % de sa puissance maximale,
- son de sonication standard ayant un diamètre de 13mm, adapté pour la sonication de volumes compris entre 10 et 250nl (réf. Fisher 75482),
- un agitateur magnétique plus un barreau aimanté,
- verrerie : becher de taille 15ml (réf. VWRN 15ml, 213-3916) 500ml (réf. VWR 50ml 212-9301),
- réactif : latex de caoutchouc naturel high ammonia à 60 % en poids de caoutchouc naturel de Trang latex CO, LTD, Thaïlande,
- poudre de silice broyée avec un mortier, silice Zeosil 1165MP de la société Rhodia, de surface spécifique BET : 160 m²/g
- eau distillée.

### Préparation de la silice hydrophobée

La silice est broyée en une poudre fine à l'aide d'un mortier et d'un pilon. L'hydrophobicité de la silice est ajustée par silanisation de sa surface avec de l'octényldiméthylchlorosilane(ODCS).

La silice hydrophobée est préparée en faisant réagir 5g de silice hydrophile avec différentes quantités de ODCS en présence de 50g de toluène (voir le tableau des compositions 1 et 2 ci-dessous).

Les quantités nécessaires de ODCS sont dissoutes dans du toluène. Le milieu est placé sous agitation à l'aide d'un agitateur magnétique. La poudre de silice broyée est ajoutée au milieu et la dispersion est laissée sous agitation pendant deux minutes. La composition est placée dans une boîte Petri (de diamètre 18,5cm) et est placée à une température de 70°C pendant une heure de manière à permettre l'évaporation du toluène. La poudre obtenue est dispersée dans de l'eau distillée après deux minutes de sonication.

| | 1 | 2 |
|---|---|---|
| Silice en g | 5 | 5 |
| ODCS en g | 0,15 | 0,20 |
| toluène | 50g | 50g |
| Nb atome C/nm² | 0,55 | 0,73 |

### Mélange-maîtres préparés :

Les mélange-maîtres sont préparés selon un procédé conforme à l'invention et ce de manière suivante.

### Préparation de la dispersion aqueuse A de latex de caoutchouc naturel

Le latex de caoutchouc naturel est pesé dans un becher en verre, un barreau aimanté y est ajouté, il est ensuite dilué dans de l'eau distillée jusqu'à une concentration de 60 % en poids de caoutchouc naturel.

### Préparation de la dispersion aqueuse de charge B

2,32g de la silice hydrophobée préparée selon les compositions 1 et 2 décrites ci-dessus sont dispersés dans 20ml d'eau. Puis l'ensemble est homogénéisé à l'aide d'une sonde ultrason pendant deux minutes. La silice agglomérée sur la sonde à la fin des deux minutes est incorporée au mélange à l'aide d'une spatule.

### Préparation du mélange-maître

3,3g de dispersion aqueuse (B) sont introduits dans un becher de 15 ml puis 3,3g de la dispersion aqueuse (A) y sont ajoutés. Le mélange est mélangé en utilisant l'agitateur magnétique à une vitesse de 700 rpm. Cette opération est réalisée pour chacune des dispersions aqueuses (B) préparées à partir des compositions 1 et 2.

### Conclusion

Il a été observé que pour chacune des compositions 1 et 2, la coagulation entre la charge inorganique renforçant hydrophobée et le latex se fait spontanément.

## Revendications

1. Procédé de préparation d'un mélange-maître d'élastomère diénique et de charge inorganique renforçante comprenant les étapes successives suivantes :
- mise en contact et mélange d'une ou plusieurs dispersions aqueuses (B) d'une ou plusieurs charges inorganiques renforçantes hydrophobées et coagulant spontanément avec ledit latex et d'un ou plusieurs latex d'élastomère diénique (A) pour obtenir un coagulum, sans nécessité d'agent de coagulation,
- récupération du coagulum, puis
- séchage du coagulum récupéré pour obtenir le mélange-maître.

2. Procédé selon la revendication 1, **caractérisé en ce que** le latex d'élastomère diénique est un latex de caoutchouc naturel.

3. Procédé selon la revendication 2, **caractérisé en ce que** le latex d'élastomère diénique est un latex concentré de caoutchouc naturel.

4. Procédé selon l'une quelconque des revendications précédentes, **caractérisé en ce que** la charge est de la silice (SiO₂).

5. Procédé selon l'une quelconque des revendications précédentes, **caractérisé en ce que** la charge est hydrophobée à l'aide d'un ou plusieurs agents hydrophobants de formule (I) suivante :
Eₙ-F (Formule I)
dans laquelle
- n est un entier égal à 1 ou 2,
- lorsque n vaut 1, alors F est un groupe monovalent,
- lorsque n vaut 2, alors F est un groupe divalent,
- E représente un groupe fonctionnel qui est capable de se lier physiquement et/ou chimiquement à la charge et comportant dans sa structure au moins une chaîne alkyle ou alkylène comportant de 1 à 18 atomes de carbone conférant au groupe E des propriétés hydrophobantes ;
- F représente un groupe pouvant se lier ou non physiquement et/ou chimiquement à l'élastomère diénique.

6. Procédé selon la revendication précédente, **caractérisé en ce que** l'agent hydrophobant est de formule (II) suivante :
[G₍₃₋ₘ₎(L-K)ₘSi-L-]ₙ-F (II)
avec
lorsque n vaut 1, alors F désigne le groupe K défini ci-dessous, et m varie de 0 à 2,
et
lorsque n vaut 2, alors F désigne un groupe amino, un groupe polysulfure (Sx), un groupe époxy, et m varie de 0 à 2,
et pour laquelle
les groupements G sont choisis, indépendamment les uns des autres, parmi un atome d'hydrogène, un groupe hydrocarboné en C₁-C₁₈ choisi parmi les groupes alkyles linéaires, ramifiés ou cycliques, les groupes aralkyles, les groupes alkylaryles et les groupes aryles, tel qu'un phényle, un benzyle, un cyclopentyle, un cyclohexyle, un groupe alkoxy (R₁O)-, dans lequel R₁ représente un radical alkyle saturé en C₁-C₈, tel que par exemple les groupes méthyle, éthyle, isopropyle, de préférence au moins un groupe méthyle et éthyle, un atome d'halogène, tel que le fluor, le chlore, le brome et l'iode et un groupement hydroxy,
à la condition qu'au moins un groupement G soit choisi parmi un groupement alkoxy, un atome de chlore, ou un groupement hydroxy,
L désigne un radical alkylène saturé ou insaturé, linéaire, ramifiée ou cyclique en C₁-C₁₈, et de préférence 1 à 8 atomes de carbone, tel que par exemple les groupes méthylène, éthylène, isopropylène, n-butylène, octadécylène, phénylène, cyclopentylène et cyclohexylène, et comportant éventuellement un atome d'oxygène,
K désigne un atome d'hydrogène, un atome d'halogène, tel que le fluor, le chlore, le brome et l'iode, un groupe fonctionnel choisi parmi un groupe amino, un groupe polyamino alkyle, un groupe mercapto, un groupe époxy, un groupe hydroxy, un groupe vinyle, un groupe acryloxy, un groupe méthacryloxy, un groupe -SCN, un groupe R(CO)S- avec R étant un groupe alkyle en C₁-C₁₈.

7. Procédé selon la revendication précédente, **caractérisé en ce que** m=0.

8. Procédé selon la revendication précédente, **caractérisé en ce que** l'agent hydrophobant est de formule (III) suivante :
G₃Si-L-K (III)
avec G, L et K étant tels que définis en revendication 6.

9. Procédé selon la revendication 7, **caractérisé en ce que** l'agent hydrophobant est de formule (IV) suivante :
[G₃Si-L-]₂-F (IV)
avec G, L et F étant tels que définis en revendication 6.

10. Procédé selon l'une quelconque des revendications 5 à 9 précédente, **caractérisé en ce que** l'agent hydrophobant est choisi parmi le chlorotriméthylsilane, chlorotriéthylsilane, chlorotripropylsilane, bromotriméthylsilane, bromotriéthylsilane, bromotripropylsilane, fluorotriméthylsilane, méthoxy triméthylsilane, méthoxytriéthylsilane, méthoxytripropylsilane, chlorotriméthylsilane, dichloro-diméthylsilane, trichlorométhylsilane, bromotriméthylsilane, dibromodiméthylsilane, tribromométhylsilane, méthoxytriméthylsilane, diméthoxydiméthylsilane, triméthoxyméthylsilane, tétraméthoxy silane, triméthoxypropylsilane, triméthoxyoctylsilane, triméthoxy hexadécylsilane, diméthoxydipropylsilane, triéthoxyéthylsilane, triéthoxypropylsilane, triéthoxyoctylsilane, diéthoxy diméthylsilane, octényldiméthylchlorosilane, octodécyltrichlorosilane, (gamma-aminopropyl) triméthoxysilane, (gamma-aminopropyl) triéthoxysilane, (gamma-hydroxypropyl) tripropoxysilane, (gamma-mercaptopropyl) triéthoxysilane, (gamma-aminopropyl) diméthyléthaxysilane, (gamma-aminopropyl) dihydroxyméthoxy-silane, (glycidylpropyl (triméthoxysilane, [(N-aminoéthyl)gamma-aminopropyl]triéthoxysilane, (gamma-méthacryloxy-propyl) triéthoxysilane, (gamma-méthacryoxy-propyl)triméthoxysilane, (béta-mercaptoéthyl) triéthoxysilane, [gamma-(N-aminoéthyl)propyl] triméthoxysilane, N-méthylaminopropyltriméthoxysilane, (gamma-thiocyanatopropyl) triéthoxysilane, bis-(3-triéthoxythiopropyl) silanetétrasulfure, vinyltriéthoxysilane, vinylphénylméthylsilane, vinyl diméthylméthoxysilane, divinyldiméthoxysilane, divinyléthyl diméthoxysilane, diméthylvinylchlorosilane, le tétrasulfure de bis 3-triéthoxysilylpropyle et leur mélange.

11. Procédé selon l'une quelconque des revendications 5 à 10, **caractérisé en ce que** l'agent hydrophobant une fois fixé sur la charge comporte au plus 30 atomes de carbone.

12. Procédé selon l'une quelconque des revendications 5 à 11, **caractérisé en ce que** l'agent hydrophobant est choisi parmi l'octényldiméthylchlorosilane, le tétrasulfure de bis 3-triéthoxysilylpropyle et leur mélange.

13. Procédé selon l'une quelconque des revendications 5 à 12, **caractérisé en ce que** la charge hydrophobée se **caractérise par** un taux d'hydrophobation supérieur ou égal à 0,29 atome de carbone portés par l'agent hydrophobant une fois fixé sur la charge par nm² de surface de charge.

14. Procédé selon l'une quelconque des revendications précédentes, **caractérisé en ce que** le procédé n'utilise pas d'agent de coagulation.

## Patentansprüche

1. Verfahren zur Herstellung eines Masterbatchs aus Dien-Elastomer und anorganischem Verstärkungsfüllstoff, umfassend die nachstehenden aufeinanderfolgenden Schritte:
- Inkontaktbringen und Mischen einer oder mehrerer wässriger Dispersionen (B) von einem oder mehreren anorganischen Verstärkungsfüllstoffen, die hydrophobiert wurden und spontan mit dem Latex koagulieren, und von einem oder mehreren Dien-Elastomerlatices (A) unter Erhalt eines Koagulats, ohne Erfordernis eines Koagulationsmittels,
- Gewinnen des Koagulats, und dann
- Trocknen des gewonnenen Koagulats unter Erhalt des Masterbatchs.

2. Verfahren gemäß Anspruch 1, **dadurch gekennzeichnet, dass** der Dien-Elastomer-Latex ein Naturkautschuk-Latex ist.

3. Verfahren gemäß Anspruch 2, **dadurch gekennzeichnet, dass** der Dien-Elastomer-Latex ein konzentrierter Naturkautschuk-Latex ist.

4. Verfahren gemäß einem der vorangehenden Ansprüche, **dadurch gekennzeichnet, dass** es sich bei dem Füllstoff um Silica (SiO₂) handelt.

5. Verfahren gemäß einem der vorangehenden Ansprüche, **dadurch gekennzeichnet, dass** der Füllstoff hydrophobiert wird mit Hilfe von einem oder mehreren Hydrophobierungsmitteln der nachstehenden Formel (I):
Eₙ-F (Formel I) worin
- n eine ganze Zahl gleich 1 oder 2 ist,
- wenn n gleich 1 ist, F eine einwertige Gruppe ist,
- wenn n gleich 2 ist, F eine zweiwertige Gruppe ist,
- E für eine funktionelle Gruppe steht, die in der Lage ist, physikalisch und/oder chemisch an den Füllstoff zu binden, und in ihrer Struktur mindestens eine 1 bis 18 Kohlenstoffatome umfassende Alkyl- oder Alkylenkette umfasst, welche der Gruppe E hydrophobierende Eigenschaften verleiht;
- F für eine Gruppe steht, die physikalisch und/oder chemisch an das Dien-Elastomer binden kann oder nicht.

6. Verfahren gemäß dem vorangehenden Anspruch, **dadurch gekennzeichnet, dass** das Hydrophobierungsmittel die nachstehende Formel (II) aufweist:
[G(3-m)(L-K)ₘSi-L-]ₙ-F (II)
wobei
wenn n gleich 1 ist, F für die nachstehend definierte Gruppe K steht, und m von 0 bis 2 beträgt,
und
wenn n gleich 2 ist, F für eine Aminogruppe, eine Polyschwefel-Gruppe (Sx), eine Epoxygruppe steht, und m 0 bis 2 beträgt,
und bei welcher
die Gruppierungen G unabhängig voneinander aus einem Wasserstoffatom, einer C₁-C₁₈-Kohlenwasserstoffgruppe, gewählt aus linearen, verzweigten oder cyclischen Alkylgruppen, Aralkylgruppen, Alkylarylgruppen und Arylgruppen, wie Phenyl, Benzyl, Cyclopentyl, Cyclohexyl, einer Alkoxygruppe (R₁O)-, worin R₁ für einen gesättigten C₁-C₈-Alkylrest, wie zum Beispiel Methyl-, Ethyl-, Isopropylgruppen, vorzugsweise mindestens eine Methyl-und Ethylgruppe, steht, einem Halogenatom, wie Fluor, Chlor, Brom und Iod, und einer Hydroxygruppierung ausgewählt sind,
mit der Maßgabe, dass mindestens eine Gruppierung G aus einer Alkoxygruppierung, einem Chloratom oder einer Hydroxygruppierung ausgewählt ist,
L für einen gesättigten oder ungesättigten, linearen, verzweigten oder cyclischen C₁-C₁₈-Alkylenrest und vorzugsweise mit 1 bis 8 Kohlenstoffatomen, wie zum Beispiel Methylen-, Ethylen-, Isopropylen-, n-Butylen-, Octadecylen-, Phenylen-, Cyclopentylen- und Cyclohexylengruppen, steht und gegebenenfalls ein Sauerstoffatom umfasst,
K für ein Wasserstoffatom, ein Halogenatom, wie Fluor, Chlor, Brom und Iod, eine funktionelle Gruppe, gewählt aus einer Aminogruppe, einer Polyaminoalkylgruppe, einer Mercaptogruppe, einer Epoxygruppe, einer Hydroxygruppe, einer Vinylgruppe, einer Acryloxygruppe, einer Methacryloxygruppe, einer Gruppe -SCN, einer Gruppe R(CO)S-, wobei R eine C₁-C₁₈-Alkylgruppe ist, steht.

7. Verfahren gemäß dem vorangehenden Anspruch, **dadurch gekennzeichnet, dass** m=0.

8. Verfahren gemäß dem vorangehenden Anspruch, **dadurch gekennzeichnet, dass** das Hydrophobierungsmittel die nachstehende Formel (III) aufweist:
G₃Si-L-K (III)
worin G, L und K wie im Anspruch 6 definiert sind.

9. Verfahren gemäß Anspruch 7, **dadurch gekennzeichnet, dass** das Hydrophobierungsmittel die nachstehende Formel (IV) aufweist:
[G₃Si-L-]₂-F (IV)
worin G, L und F wie im Anspruch 6 definiert sind.

10. Verfahren gemäß einem der vorangehenden Ansprüche 5 bis 9, **dadurch gekennzeichnet, dass** das Hydrophobierungsmittel aus Chlortrimethylsilan, Chlortriethylsilan, Chlortripropylsilan, Bromtrimethylsilan, Bromtriethylsilan, Bromtripropylsilan, Fluortrimethylsilan, Methoxytrimethylsilan, Methoxytriethylsilan, Methoxytripropylsilan, Chlortrimethylsilan, Dichlordimethylsilan, Trichlormethylsilan, Bromtrimethylsilan, Dibromdimethylsilan, Tribrommethylsilan, Methoxytrimethylsilan, Dimethoxy-dimethylsilan, Trimethoxymethylsilan, Tetramethoxysilan, Trimethoxypropylsilan, Trimethoxyoctylsilan, Trimethoxyhexadecylsilan, Dimethoxydipropylsilan, Triethoxymethylsilan, Triethoxypropylsilan, Triethoxyoctylsilan, Diethoxydimethylsilan, Octenyldimethylchlorsilan, Octodecyltrichlorsilan, (gamma-Aminopropyl)trimethoxysilan, (gamma-Aminopropyl)tri-ethoxysilan, (gamma-Hydroxypropyl)tripropoxysilan, (gamma-Mercaptopropyl)triethoxysilan, (gamma-Amino-propyl)dimethylethoxysilan, (gamma-Aminopropyl)di-hydroxymethoxysilan, (Glycidylpropyl)trimethoxysilan, [(N-Aminoethyl)gamma-aminopropyl]triethoxysilan, (gamma-Methacryloxy-propyl)triethoxysilan, (gamma-Methacryloxy-propyl)trimethoxysilan, (beta-Mercaptoethyl)triethoxysilan, [gamma-(N-Aminoethyl)propyl]trimethoxysilan, N-Methylaminopropyltrimethoxysilan, (gamma-Thiocyanatopropyl)triethoxysilan, Bis(3-triethoxythiopropyl)silantetrasulfid, Vinyltriethoxysilan, Vinylphenylmethylsilan, Vinyldimethylmethoxysilan, Divinyldimethoxysilan, Divinylethyldimethoxysilan, Dimethylvinylchlorsilan, Bis(3-triethoxysilylpropyl)tetrasulfid und Mischungen davon ausgewählt wird.

11. Verfahren gemäß einem der Ansprüche 5 bis 10, **dadurch gekennzeichnet, dass** das Hydrophobierungsmittel nach Fixierung auf dem Füllstoff höchstens 30 Kohlenstoffatome umfasst,

12. Verfahren gemäß einem der Ansprüche 5 bis 11, **dadurch gekennzeichnet, dass** das Hydrophobierungsmittel aus Octenyldimethylchlorsilan, Bis(3-triethoxysilylpropyl)tetrasulfid und einer Mischung davon ausgewählt wird.

13. Verfahren gemäß einem der Ansprüche 5 bis 12, **dadurch gekennzeichnet, dass** der hydrophobierte Füllstoff durch einen Hydrophobierungsgrad größer oder gleich 0,29 Kohlenstoffatomen, die vom Hydrophobierungsmittel nach Fixierung auf dem Füllstoff getragen werden, je nm² der Oberfläche des Füllstoffs gekennzeichnet ist.

14. Verfahren gemäß einem der vorangehenden Ansprüche, **dadurch gekennzeichnet, dass** bei dem Verfahren kein Koagulationsmittel verwendet wird.

## Claims

1. Process for the preparation of a masterbatch of diene elastomer and reinforcing inorganic filler comprising the following successive stages:
- bringing into contact and mixing one or more aqueous dispersions (B) of one or more hydrophobized reinforcing inorganic fillers, which coagulate(s) spontaneously with the said latex, and one or more diene elastomer latexes (A) in order to obtain a coagulum, without requiring a coagulating agent,
- recovery of the coagulum, then
- drying the recovered coagulum in order to obtain the masterbatch.

2. Process according to Claim 1, **characterized in that** the diene elastomer latex is a natural rubber latex.

3. Process according to Claim 2, **characterized in that** the diene elastomer latex is a natural rubber concentrated latex.

4. Process according to any one of the preceding claims, **characterized in that** the filler is silica (SiO₂).

5. Process according to any one of the preceding claims, **characterized in that** the filler is hydrophobized using one or more hydrophobing agents of following formula (I):
Eₙ-F (Formula I)
in which:
- n is an integer equal to 1 or 2,
- when n has the value 1, then F is a monovalent group,
- when n has the value 2, then F is a divalent group,
- E represents a functional group which is capable of bonding physically and/or chemically to the filler and which comprises, in its structure, at least one alkyl or alkylene chain comprising from 1 to 18 carbon atoms which confers hydrophobing properties on the group E,
- F represents a group which may or may not bond physically and/or chemically to the diene elastomer.

6. Process according to the preceding claim, **characterized in that** the hydrophobing agent is of following formula (II):
[G₍₃₋ₘ₎(L-K)ₘSi-L-]ₙ-F (II)
with:
when n has the value 1, then F denotes the K group defined below and m varies from 0 to 2, and
when n has the value 2, then F denotes an amino group, a polysulphide (Sₓ) group or an epoxy group and m varies from 0 to 2,
and for which
the G groups are chosen, independently of one another, from a hydrogen atom, a C₁-C₁₈ hydrocarbon group chosen from linear, branched or cyclic alkyl groups, aralkyl groups, alkylaryl groups and aryl groups, such as a phenyl, a benzyl, a cyclopentyl, a cyclohexyl, an alkoxy (R₁O)- group, in which R₁ represents a saturated C₁-C₈ alkyl radical, such as, for example, the methyl, ethyl and isopropyl groups, preferably at least one methyl and ethyl group, a halogen atom, such as fluorine, chlorine, bromine and iodine, and a hydroxyl group,
provided that at least one G group is chosen from an alkoxy group, a chlorine atom or a hydroxyl group,
L denotes a saturated or unsaturated and linear, branched or cyclic C₁-C₁₈ alkylene radical, preferably of 1 to 8 carbon atoms, such as, for example, the methylene, ethylene, isopropylene, n-butylene, octadecylene, phenylene, cyclopentylene and cyclohexylene groups, and optionally comprising an oxygen atom,
K denotes a hydrogen atom, a halogen atom, such as fluorine, chlorine, bromine and iodine, or a functional group chosen from an amino group, a polyaminoalkyl group, a mercapto group, an epoxy group, a hydroxyl group, a vinyl group, an acryloyloxy group, a methacryloyloxy group, an -SCN group or an R(CO)S- group with R being a C₁-C₁₈ alkyl group.

7. Process according to the preceding claim, **characterized in that** m=0.

8. Process according to the preceding claim, **characterized in that** the hydrophobing agent is of following formula (III):
G₃Si-L-K (III)
with G, L and K being as defined in Claim 6.

9. Process according to Claim 7, **characterized in that** the hydrophobing agent is of following formula (IV):
[G₃Si-L-]₂-F (IV)
with G, L and F being as defined in Claim 6.

10. Process according to any one of the preceding Claims 5 to 9, **characterized in that** the hydrophobing agent is chosen from chlorotrimethylsilane, chlorotriethylsilane, chlorotripropylsilane, bromotrimethylsilane, bromotriethylsilane, bromotripropylsilane, fluorotrimethylsilane, methoxytrimethylsilane, methoxytriethylsilane, methoxytripropylsilane, chlorotrimethylsilane, dichlorodimethylsilane, trichloromethylsilane, bromotrimethylsilane, dibromodimethylsilane, tribromomethylsilane, methoxytrimethylsilane, dimethoxydimethylsilane, trimethoxymethylsilane, tetramethoxysilane, trimethoxypropylsilane, trimethoxyoctylsilane, trimethoxyhexadecylsilane, dimethoxydipropylsilane, triethoxymethylsilane, triethoxypropylsilane, triethoxyoctylsilane, diethoxydimethylsilane, octenyldimethylchlorosilane, octadecyltrichlorosilane, (γ-aminopropyl)trimethoxysilane, (y-aminopropyl)triethoxysilane, (y-hydroxypropyl)tripropoxysilane, (γ-mercaptopropyl)triethoxysilane, (γ-aminopropyl)dimethylethoxysilane, (γ-aminopropyl)dihydroxymethoxysilane, (glycidylpropyl)trimethoxysilane, [γ-(N-aminoethyl)aminopropyl]triethoxysilane, (γ-methacryloyloxypropyl)triethoxysilane, (γ-methacryloyloxypropyl)trimethoxysilane, (β-mercaptoethyl)triethoxysilane, [γ-(N-aminoethyl)propyl]trimethoxysilane, (N-methylaminopropyl)trimethoxysilane, (γ-thiocyanatopropyl)triethoxysilane, bis-(3-triethoxythiopropyl) silane tetrasulphide, vinyltriethoxysilane, vinylphenylmethylsilane,
vinyldimethylmethoxysilane,
divinyldimethoxysilane,
divinylethyldimethoxysilane, dimethylvinylchlorosilane, bis(3-triethoxysilylpropyl) tetrasulphide and their mixture.

11. Process according to any one of Claims 5 to 10, **characterized in that** the hydrophobing agent, once attached to the filler, comprises at most 30 carbon atoms.

12. Process according to any one of Claims 5 to 11, **characterized in that** the hydrophobing agent is chosen from octenyldimethylchlorosilane, bis(3-triethoxysilylpropyl) tetrasulphide and their mixture.

13. Process according to any one of Claims 5 to 12, **characterized in that** the hydrophobized filler is **characterized by** a degree of hydrophobation of greater than or equal to 0.29 carbon atom carried by the hydrophobing agent, once attached to the filler, per nm² of filler surface area.

14. Process according to any one of the preceding claims, **characterized in that** the process does not use a coagulating agent.
